(19) Europäisches Patentamt
European Patent Office
Office européen des brevets

(11) **EP 3 053 303 B1**

## (12) FASCICULE DE BREVET EUROPEEN

(45) Date de publication et mention
de la délivrance du brevet:
**31.10.2018 Bulletin 2018/44**

(21) Numéro de dépôt: **14777735.3**

(22) Date de dépôt: **11.09.2014**

(51) Int Cl.:
**H04L 12/18** *(2006.01)*

(86) Numéro de dépôt international:
**PCT/FR2014/052260**

(87) Numéro de publication internationale:
**WO 2015/049431 (09.04.2015 Gazette 2015/14)**

(54) **PROCEDE D'ABONNEMENT A DES FLUX EN PROVENANCE DE CLIENTS MULTICAST**

VERFAHREN ZUR ABONNIERUNG VON VON MULTICASTKLIENTEN KOMMENDEN DATENSTRÖMEN

METHOD FOR SUBSCRIBING TO STREAMS COMING FROM MULTICAST CLIENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2013 FR 1359507**

(43) Date de publication de la demande:
**10.08.2016 Bulletin 2016/32**

(73) Titulaire: **Orange**
**75015 Paris (FR)**

(72) Inventeur: **LEMOINE, Benoît**
**22300 Ploubezre (FR)**

(56) Documents cités:
**WO-A2-2011/067495      US-A1- 2007 263 625**

• **BHATTACHARYYA S ET AL: "An Overview of Source-Specific Multicast (SSM); rfc3569.txt", 20030701, 1 juillet 2003 (2003-07-01), XP015009351, ISSN: 0000-0003 cité dans la demande**

**Description**

## 1. Domaine de l'invention

La demande d'invention se situe dans le domaine des groupes de diffusion de flux de données multicast.

Plus précisément, la demande d'invention concerne les groupes de diffusion multicast bidirectionnels ainsi que l'abonnement à des flux en provenance de clients multicast.

## 2. Etat de la technique antérieure

Les services mettant en oeuvre le transport multicast dans les réseaux IP (Internet Protocol) se sont d'abord limités à la diffusion de paquets en provenance d'un serveur multicast à destination de clients multicast. Ainsi dans le cas de la diffusion de la télévision sur Internet, le serveur de tête de réseau est soit contrôlé par l'opérateur, soit contrôlé par un fournisseur de contenus avec lequel l'opérateur a des accords, ce qui lui permet de maîtriser la qualité de service jusqu'au client.

Le mode de transport multicast est à présent utilisé non plus seulement dans le sens descendant d'un serveur vers des clients multicast, mais en permettant à chaque client multicast d'émettre des paquets IP multicast à destination du groupe multicast via le réseau de transport.

Si un client quelconque émet un débit important de trafic IP multicast à destination de l'adresse IP du groupe multicast à laquelle sont abonnés d'autres clients, l'interface d'accès au réseau IP de ces derniers risque d'être saturée par le trafic IP multicast du premier.

Afin de limiter le nombre de flux multicast reçus par un client multicast, ce dernier peut demander au réseau à recevoir des flux multicast en spécifiant en plus de l'adresse IP du groupe multicast la ou les adresses IP sources à autoriser ou à exclure par exemple à l'aide du protocole IGMPv3 (Internet Group Management Protocol, ou protocole de gestion de groupe Internet) défini dans le standard IETF RFC 3376 (Internet Engineering Task Force, Request For Comments) ou du protocole MLDv2 (Multicast Listener Discovery, ou découverte d'auditeur en multidiffusion) défini dans le standard IETF RFC 3810.

Dans la suite du document, lorsqu'un client multicast s'abonne à un flux multicast émis par un autre client ou par un serveur, cela signifie que l'adresse IP de cet autre client ou du serveur est spécifiée dans une demande de réception de flux multicast.

La demande de brevet WO 2011/067495 décrit un procédé de contrôle d'admission des requêtes IGMPv3 ou MLDv2 permettant de limiter le nombre de flux multicast à redescendre vers un client en comparant les débits descendants garantis avec les débit montants autorisés, mais ce procédé suppose que ces débits soient connus de l'entité de contrôle d'admission.

Ces débits ne sont pas toujours connus. C'est le cas par exemple lorsque les flux multicast sont émis par des clients multicast accédant au réseau par un point d'accès Wi-Fi. Il est impossible alors de connaitre à l'avance le débit des différents flux multicast IP montants car tous les terminaux Wi-Fi n'implémentent pas le standard IEEE 802.11e (Institute of Electrical and Electronics Engineers).

Un des buts de l'invention est de remédier à ces inconvénients de l'état de la technique.

## 3. Exposé de l'invention

L'invention vient améliorer la situation à l'aide d'un procédé de demande d'abonnement à un flux de données diffusé dans un groupe de diffusion multicast, ledit groupe comprenant des sources dont un serveur, un premier client et un second client, lesdites sources étant connectées entre elles au travers d'un réseau de communications électroniques, le groupe de diffusion multicast étant identifié par une adresse, un flux émis à destination de l'adresse du groupe multicast par une première source étant reçu par une seconde source si la seconde source est préalablement abonnée à la première source, le premier client étant abonné au serveur, le procédé comprenant les étapes suivantes mises en oeuvre par le premier client:

- réception, en provenance du serveur, d'au moins un message de gestion comprenant au moins un paramètre de qualité relatif au flux émis à destination de l'adresse du groupe multicast par le second client,
- décision d'abonnement au second client, en fonction d'un critère dépendant de l'au moins un paramètre de qualité reçu,
- en cas de décision positive, émission d'un message de demande d'abonnement au flux émis par le second client.

Grâce à l'invention, un premier client d'un groupe multicast bidirectionnel obtient du serveur des paramètres de qualité d'un flux émis par un second client, avant de s'y abonner. Ainsi, si un ou plusieurs paramètres de qualité obtenus du serveur indiquent qu'un critère conditionnant l'abonnement du premier au second client n'est pas rempli, comme par exemple un signal exigeant trop de débit ou trop de mémoire en file d'attente, le premier client peut décider de ne pas s'y abonner. Selon la technique antérieure, aucune information n'était disponible à un client relativement à la qualité d'un flux multicast émis par un autre client, avant s'y abonner pour recevoir ce flux.

Selon un aspect de l'invention, l'étape de décision prend en compte un critère comprenant la valeur d'un débit moyen nécessaire pour recevoir le flux émis à destination de l'adresse du groupe multicast par le second client, et est précédée d'une étape de calcul de cette valeur, à partir de l'au moins un paramètre de qualité.

Les paramètres de qualité compris par exemple dans un message de gestion de type RTCP SR (Real-time Transfer Control Protocol, Sender Report, ou protocole de contrôle des transferts en temps réel, rapport d'émetteur) émis par un serveur multicast selon le RFC 3550 sont: le nombre de paquets reçus, le nombre d'octets utiles des paquets RTP reçus (Real-time Transfer Protocol, ou protocole de contrôle des transferts en temps réel), et le nombre de paquets RTP perdus depuis le début d'une session RTP.

Avantageusement, à l'aide de ces paramètres de qualité il est donc possible pour le premier client de calculer le débit moyen du flux émis par le second client, qui est identique au débit moyen nécessaire pour recevoir ce flux.

Selon un aspect de l'invention, l'étape de décision prend en compte un critère comprenant la valeur d'une taille de file d'attente nécessaire pour recevoir le flux émis à destination de l'adresse du groupe multicast par le second client, et est précédée d'une étape de calcul de cette valeur, à partir de l'au moins un paramètre de qualité.

Les paramètres de qualité compris par exemple dans un message de gestion de type RTCP XR (eXtended Report, ou rapport étendu) émis par un serveur multicast selon le RFC 3611 sont: le taux de paquets RTP perdus, le taux de paquets RTP non pris en compte du fait d'une arrivée tardive ou prématurée, le taux de paquets RTP perdus ou non pris en compte durant une rafale, le taux de paquets RTP perdus ou non pris en compte entre deux rafales.

Avantageusement, à l'aide de ces paramètres de qualité il est donc possible pour le premier client de calculer une valeur de taille de file d'attente associée au flux émis par le second client.

Selon un aspect de l'invention, le message de demande d'abonnement comprend la valeur calculée.

Le débit calculé représente un débit supplémentaire par rapport à ce que le premier client reçoit déjà en termes de débit avant son abonnement au second client. De même la taille de file d'attente calculée représente une taille supplémentaire par rapport à ce que le premier client reçoit déjà en termes de file d'attente avant son abonnement au second client.

Avantageusement, grâce à l'inclusion, dans sa demande d'abonnement, du débit moyen et/ou de la taille de file d'attente calculés pour recevoir le flux, si le premier client a pris la décision de s'abonner sans savoir s'il dispose de ce débit ou de cette taille de file d'attente supplémentaire, il permet à une autre entité du réseau, recevant la demande, de vérifier que ce débit supplémentaire est bien disponible dans le sens descendant jusqu'au premier client.

Les différents aspects du procédé de demande d'abonnement à un flux de données qui viennent d'être décrits peuvent être mis en oeuvre indépendamment les uns des autres ou en combinaison les un avec les autres.

L'invention concerne encore un dispositif de demande d'abonnement à un flux de données apte à mettre en oeuvre le procédé de demande d'abonnement à un flux de données qui vient d'être décrit, dans tous ses modes de réalisation.

L'invention concerne aussi un procédé de gestion de flux de données diffusés dans un groupe de diffusion multicast, ledit groupe comprenant des sources dont un serveur, un premier client et au moins un second client, lesdites sources étant connectées entre elles au travers d'un réseau de communications électroniques, le groupe de diffusion multicast étant identifié par une adresse, un flux émis à destination de l'adresse du groupe multicast par une première source étant reçu par une seconde source si la seconde source est préalablement abonnée à la première source, le premier client étant abonné au serveur, le serveur étant abonné audit au moins un second client et étant apte à recevoir un flux émis par le second client à destination de l'adresse du groupe multicast, et à en extraire au moins un paramètre relatif à la qualité dudit flux, le procédé comprenant les étapes suivantes mises en oeuvre par le serveur:

- sélection d'au moins un client parmi l'au moins un second client, en fonction de l'au moins un paramètre extrait,
- émission à destination de l'adresse du groupe multicast d'au moins un message de gestion comprenant l'au moins un paramètre extrait correspondant à l'au moins un client sélectionné.

Le serveur, qui est abonné à tous les flux du groupe multicast, reçoit donc tous les flux émis par tous les terminaux du groupe multicast, dont en particulier des messages émis par les premier et second terminaux à destination de l'adresse du groupe multicast, par exemple les messages de type RTP qui comprennent des données utiles ainsi que l'identifiant de leur émetteur.

Ceci permet donc au serveur de mesurer certains paramètres de qualité des données utiles reçues des terminaux et de les leur associer.

Le serveur devient donc capable d'émettre, dans un flux vers l'adresse du groupe multicast, c'est à dire vers tous les terminaux du groupe, des messages de gestion comprenant un certain nombre de paramètres, qui seront pour chacun de ces terminaux une aide à la décision de s'abonner au flux d'un ou plusieurs autres terminaux du groupe.

Ces messages de gestion sont par exemple des messages de type RTCP SR ou XR, qui comprennent un identifiant d'une source émettrice ainsi que certains paramètres de qualité tels que nombre d'octets ou de paquet reçus dans un intervalle de temps donné, nombre de paquets perdus, gigue, etc., ces paramètres étant représentatifs de la qualité du lien entre la source, c'est à dire le client, et un noeud du réseau dans le sens montant.

Certains terminaux ont une mauvaise qualité de flux remontant, qui font d'eux des mauvais candidats pour les autres terminaux souhaitant s'abonner à des flux du groupe multicast autres que ceux du serveur.

Grâce à l'étape de sélection, le serveur peut éliminer de ses messages de gestion les informations relatives aux terminaux dont le flux remontant est de mauvaise qualité, ce qui évitera aux autres terminaux de les considérer comme bons candidats d'abonnement.

Avantageusement selon l'invention, le nombre de messages RTCP SR/XR émis par les serveur est ainsi réduit par rapport à la technique antérieure où il envoie automatiquement un tel message dès qu'il reçoit un flux RTP.

De plus, les messages de gestion concernant des flux de mauvaise qualité ne sont pas ou difficilement exploitables par les terminaux les recevant. Grâce à l'étape d'émission, les terminaux ne reçoivent que des messages de gestion exploitables, contrairement à la technique antérieure.

L'invention concerne encore un dispositif de gestion de flux de données apte à mettre en oeuvre le procédé de gestion de flux de données qui vient d'être décrit, dans tous ses modes de réalisation.

L'invention concerne aussi un équipement client d'un groupe de diffusion multicast connecté à un réseau de communications électroniques et comprenant un dispositif de demande d'abonnement à un flux de données tel que décrit précédemment. Cet équipement client peut être par exemple un terminal d'utilisateur tel qu'un téléphone intelligent (smartphone), une tablette numérique, un ordinateur ou un capteur.

L'invention concerne aussi un équipement serveur d'un groupe de diffusion multicast connecté à un réseau de communications électroniques et comprenant un dispositif de gestion de flux de données tel que décrit précédemment. Cet équipement serveur peut être par exemple un serveur de télévision, un serveur de jeux, de visioconférence ou bien encore un serveur de réseau de capteurs.

L'invention concerne encore un groupe de diffusion multicast comprenant un équipement serveur et au moins deux équipements clients tel que décrits précédemment, les équipements étant connectés entre eux au travers d'un réseau de communications électroniques.

L'invention concerne aussi un programme d'ordinateur comprenant des instructions pour la mise en oeuvre des étapes du procédé de demande d'abonnement à un flux de données qui vient d'être décrit, lorsque ce procédé est exécuté par un processeur.

L'invention concerne de plus un support d'enregistrement, lisible par un équipement client, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur comprenant des instructions pour la mise en oeuvre des étapes du procédé de gestion de flux de données qui vient d'être décrit, lorsque ce procédé est exécuté par un processeur.

L'invention concerne enfin un support d'enregistrement, lisible par un équipement serveur, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :

- la figure 1 présente de façon schématique un groupe de diffusion multicast dans un réseau comprenant plusieurs sources dont un serveur, selon un aspect de l'invention,
- la figure 2 présente un exemple d'enchaînement et de mise en oeuvre des étapes du procédé de demande d'abonnement à un flux de données et du procédé de gestion de flux de données, selon un aspect de l'invention,
- la figure 3 présente un exemple de mise en oeuvre, par un client, des étapes du procédé de demande d'abonnement à un flux de données, selon un aspect de l'invention,
- la figure 4 présente un exemple de mise en oeuvre, par un serveur, des étapes du procédé de gestion de flux de données, selon un aspect de l'invention,
- la figure 5 présente un exemple de structure d'un dispositif de demande d'abonnement à un flux de données, selon un aspect de l'invention,

- la figure 6 présente un exemple de structure d'un dispositif de gestion de flux de données, selon un aspect de l'invention.

## 5. Description détaillée d'au moins un mode de réalisation de l'invention

Dans la suite de la description, on présente des exemples de plusieurs modes de réalisation de l'invention se basant sur les protocoles de diffusion multicast de l'IETF, mais l'invention s'applique également à d'autres protocoles, tel que par exemple l'ATM (Asynchronous Transfer Mode, ou mode de transfert asynchrone) ou l'Ethernet, ou bien un protocole de transport adapté aux capteurs, tel que ZigBee, Bluetooth ou Wi-Fi.

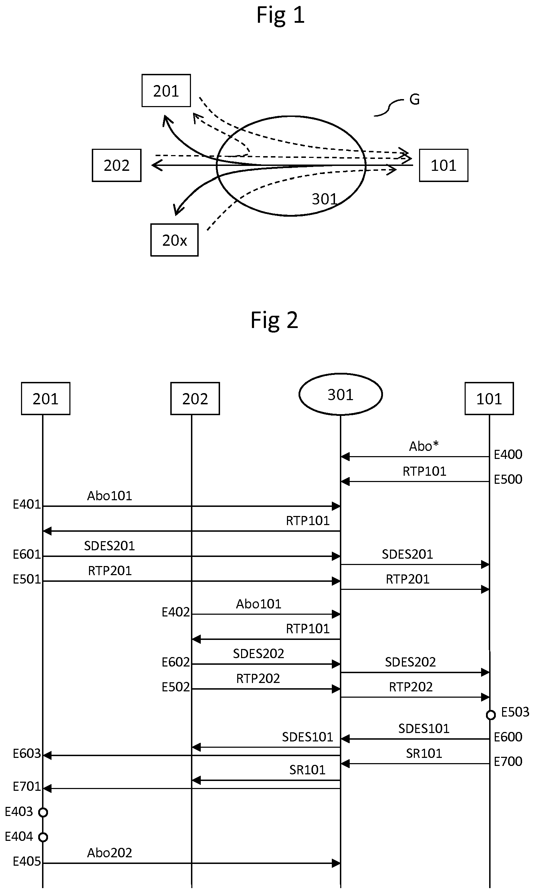

La **figure 1** présente de façon schématique un groupe de diffusion multicast dans un réseau comprenant plusieurs sources dont un serveur, selon un aspect de l'invention.

Dans un tel groupe de diffusion multicast G d'adresse aG, chaque source est connectée à un réseau de communications électroniques 301, généralement un réseau de type IP, et peut émettre des paquets à destination de aG des paquets vers le réseau 301.

Les sources sont soit des clients, tels que les clients 201 à 20x, soit un serveur, tel que le serveur 101.

Au minimum, chaque client 201 à 20x s'abonne au flux multicast d'adresse aG émis par le serveur 101. Tous les clients recoivent donc tout ce qui est émis par le serveur à destination de aG, comme indiqué par les traits pleins. Un client ne reçoit pas ce qui est émis par un autre client tant qu'il ne s'est pas abonné expressément au flux multicast d'adresse aG émis par cet autre client.

De son côté, le serveur s'abonne aux flux multicast d'adresse aG émis par chacun des clients 201 à 20x. Le serveur reçoit donc tout ce qui est émis par les clients à destination de aG, comme indiqué par les traits pointillés, ce qui lui permet en particulier de recevoir leur trafic RTP respectifs.

Dans un groupe multicast, un client émet des données temps réel, aussi appelées trafic RTP, et des messages de contrôles, aussi appelés messages RTCP. Des paquets RTP sont par exemple diffusés toutes les dix millisecondes, mais les messages de contrôle RTCP sont diffusés avec une fréquence moins élevée, par exemple toutes les secondes.

Le trafic RTP reçu d'un client par le serveur lui permet d'obtenir des informations relatives au flux émis par ce client, et d'émettre des messages de type RTCP SR ou XR, comprenant des paramètres relatifs à la qualité du flux de ce client reçu par le serveur.

Selon l'invention, le serveur sélectionne les clients pour lesquelles il émet des messages RTCP SR ou XR. La technique antérieure, au contraire, contrainte par le RFC 3550, ne fait pas de différence entre le client et le serveur et force le serveur à émettre de tels messages soit pour tous les clients du groupe multicast, soit pour aucun. Avantageusement, le serveur selon l'invention ne sélectionnera pas des clients pour lesquels, par exemple, les paramètres de qualité présentent des valeurs insuffisantes.

Selon l'invention, un client souhaitant s'abonner à un autre client peut calculer, à l'aide des messages RTCP SR ou XR reçus en provenance du serveur, le débit moyen nécessaire pour recevoir son flux, et ainsi déterminer, en fonction du débit descendant qui lui est disponible, s'il lui est possible de s'abonner.

Mais pour s'abonner, ce client doit connaitre l'adresse IP du client dont il souhaite recevoir le flux et dont il a calculé le débit moyen nécessaire. Les messages RTCP SR ou XR, comme les messages RTP, ne comprennent pas d'adresse IP source des flux auxquels ils se réfèrent mais seulement des identifiants SSRC (Synchronisation SouRCe, ou source de synchronisation), afin d'assurer une indépendance entre réseau IP et réseau multicast.

Un message RTCP SDES (Source DEScription, ou description de source) reçu d'un client par le serveur lui permet toutefois de faire le lien entre l'adresse IP et l'identifiant SSRC du client. En effet, les messages de type RTCP SDES comprennent, en plus de l'identifiant SSRC de la source émettrice, un autre identifiant contenant sous une forme ASCII l'adresse IPv4 ou IPv6 de cette source.

Le serveur peut réémettre vers l'adresse aG les messages RTCP SDES reçus des différents clients, ou les agréger pour émettre un message RTCP SDES agrégé vers l'adresse aG. Lorsqu'un client reçoit le message RTCP SDES agrégé, cela lui permet de faire le lien entre les adresses IP des autres clients et leur identifiant SSRC. Ceci est nécessaire pour au moins deux raisons:

1. la première est qu'une demande d'abonnement à un client, utilisant une requête IGMPv3 ou MLDv2, doit préciser l'adresse IP de ce client, alors que les messages RTCP SR ou XR selon le RFC 3550 ne précisent que l'identifiant SSRC d'une source ;
2. la deuxième est qu'un identifiant SSRC doit être unique dans un groupe multicast, et qu'un client qui ne s'abonne qu'au flux multicast émis par le serveur ne connait pas les identifiants SSRC déjà utilisés et peut fort bien s'attribuer un identifiant déjà pris, ce qui entraine une dégradation de la qualité de la diffusion multicast vers les clients en conflit.

La **figure 2** présente un exemple d'enchainement et de mise en oeuvre des étapes du procédé de demande d'abonnement à un flux de données et du procédé de gestion de flux de données, selon un aspect de l'invention.

Pour des facilités d'illustration, le nombre de clients est réduit à deux dans la figure, avec un premier client 201 souhaitant s'abonner à une seconde source autre que le serveur, et un seul second client 202. Les explications suivantes s'appliquent également au cas où plusieurs seconds clients 202, 203, 204, etc. font partie du groupe multicast avec le premier client 201 et le serveur 101.

Lors d'une étape E400, le serveur 101 s'abonne à l'ensemble des flux à destination de l'adresse multicast aG, en émettant une requête IGMPv3 ou MLDv2 vers le réseau 301, précisant l'adresse aG comme adresse de groupe multicast et n'excluant aucune adresse source.

Lors d'une étape E500 le serveur 101 commence à émettre du trafic RTP à destination de l'adresse multicast aG en utilisant son adresse source S. Aucun des clients 201 ou 202 ne reçoit ce trafic, ou tout autre trafic émis par l'adresse S, tant qu'ils ne se sont pas individuellement abonnés au flux à destination de l'adresse multicast aG émis par l'adresse S.

Lors d'une étape E401, le client 201 s'abonne au flux à destination de l'adresse multicast aG émis par l'adresse S, en émettant une requête IGMPv3 ou MLDv2 vers le réseau 301, précisant l'adresse aG comme adresse de groupe multicast et l'adresse S comme adresse source. Le client 201 commence à recevoir le trafic RTP émis pour le groupe multicast par l'adresse S, c'est à dire par le serveur.

Lors d'une étape E601, le client 201 émet un message RTCP SDES comprenant sa propre adresse IP1 et son propre identifiant SSRC1.

Lors d'une étape E501, le client 201 émet du trafic RTP à destination de l'adresse multicast aG en utilisant son adresse source IP1.

Lors d'une étape E402, le client 202 s'abonne au flux à destination de l'adresse multicast aG émis par l'adresse S, en émettant une requête IGMPv3 ou MLDv2 vers le réseau 301, précisant l'adresse aG comme adresse de groupe multicast et l'adresse S comme adresse source. Le client 202 commence à recevoir le trafic RTP émis pour le groupe multicast par l'adresse S, c'est à dire par le serveur.

Lors d'une étape E602, le client 202 émet un message RTCP SDES comprenant sa propre adresse IP2 et son propre identifiant SSRC2.

Lors d'une étape E502, le client 202 émet du trafic RTP à destination de l'adresse multicast aG en utilisant son adresse source IP2.

Lors d'une étape E503, le serveur 101, ayant préalablement reçu le trafic RTP à destination de l'adresse multicast aG, sélectionne au moins un client parmi les sources 201 et 202, en fonction de paramètres obtenus dans leurs trafics RTP respectifs. Lors de l'étape 503, le serveur 101 peut déterminer si le trafic RTP reçu en provenance d'une source présente des pertes de paquets, en vérifiant la continuité des numéros de séquence contenus dans l'entête des paquets RTP. Le serveur 101 peut par exemple décider de sélectionner le client source uniquement en cas d'absence de perte de paquet. D'autres critères de sélection peuvent être retenus, comme une gigue inter-arrivée excessive, la gigue inter-arrivée étant définie dans le RFC 3550.

Pour faciliter l'explication il est supposé dans la suite que le client 202 fait partie des clients sélectionnés lors de cette étape E503.

Lors d'une étape E600, le serveur 101 génère et émet un message RTCP SDES agrégé, composé d'extraits des messages RTCP SDES reçus suite aux étapes E601 et E602, en provenance des clients sélectionnés lors de l'étape E503. Les clients recevant le message RTCP SDES agrégé peuvent ainsi prendre connaissance de l'adresse IP associée aux SSRC des autres clients et détecter une éventuelle collision de SSRC.

Lors d'une étape E603, le client 201 reçoit le message RTCP SDES agrégé et mémorise les couples { adresse IP , identifiant SSRC } qu'il contient. En particulier, il sait dorénavant que l'identifiant SSRC2 correspond à l'adresse IP2.

Lors d'une étape E700, le serveur 101 émet un message RTCP SR comprenant des paramètres de qualité relatifs aux trafics RTP émis par les clients sélectionnés lors de l'étape E503, ces clients étant identifiés uniquement par leur SSRC dans le message. Les numéros de séquence ainsi que les informations temporelles contenus dans l'entête des paquets RTP sont utilisés à cet effet, tel que défini dans le RFC 3550.

Lors d'une étape E701, le client 201 reçoit le message RTCP SR comprenant des paramètres de qualité relatifs aux trafics RTP émis par le client 202. Le message RTCP SR indique l'identifiant SSRC2, mais pas l'adresse IP2. Le standard IETF RFC 3550 a défini les informations suivantes pour le message RTCP SR:

- l'identifiant SSRC de la source RTP ayant émis le flux RTP reçus auquel correspondent les informations suivantes:
- le nombre OC d'octets utiles des paquets RTP reçus depuis le début de la session RTP en provenance de la source RTP,

- le nombre PC de paquets RTP reçus depuis le début de la session RTP en provenance de la source RTP,
- le nombre LPC de paquets RTP perdus depuis le début de la session RTP en provenance de la source RTP,
- la gigue inter arrivée calculée selon un algorithme défini par le RFC 3550.

Chaque message RTCP SR contient en plus une information temporelle NTP (Network Time Protocol, ou protocole du temps réseau) relative à son instant d'émission.

Lors d'une étape E403, le client 201 calcule une valeur de débit moyen associé au flux émis par le client 202, à l'aide des informations comprises dans le message reçu lors de l'étape E701.

Cette valeur de débit moyen utile peut être calculée pour chaque période de temps compris entre l'instant NTP(n) d'émission d'un message RTCP SR reçu par un client (c'est à dire dans notre exemple le client 201) et contenant des informations OC(n,i) et LPC(n,i) relative à une source SSRC(i) (c'est à dire dans notre exemple le client 202) et l'instant d'émission NTP(n+j) de n'importe quel message RTCP SR suivant reçu par ce client (201) et contenant des informations OC (n+j,i) et LPC(n+j,i) relatives à la même source SSRC(i).

Si la valeur LPC(n+j,i) est égale à la valeur LPC(n,i) alors le nombre moyen MPR de paquets émis par unité de temps par la source SSRC(i) peut être calculé comme étant égal à MPR = [PC(n+j,i) - PC(n,i)] / [NTP(n+j) - NTP(n)].

On notera que si la valeur LPC(n+j,i) n'est pas égale à la valeur LPC(n,i) cela signifie que le serveur n'a pas reçu l'ensemble des paquets RTP en provenance de la source SSRC(i) pendant cette période de temps, si bien que le client (201) risque fortement de ne pas recevoir l'ensemble des paquets RTP en provenance de cette source s'il demande au réseau à recevoir le flux multicast en provenance de cette source. En effet, le coeur de réseau IP étant généralement bien dimensionné, la cause la plus probable de perte de paquet sera, par exemple, soit le segment Wi-Fi entre la source SSRC(i) et le point d'accès Wi-Fi auquel elle est attachée, soit le lien de raccordement au réseau de ce point d'accès Wi-Fi.

Afin d'évaluer le débit moyen correspondant, il est possible de déterminer la taille moyenne MPS de la charge utile de paquets IP utilisés par la source SSRC(i) pour le transport de son flux RTP comme étant égal à MPS = [OC(n, i) / PC(n,i)].

Dans le cas où cette taille moyenne de la charge utile est entière et ne varie pas [OC(n+j,i) / PC(n+j,i)] = [OC(n, i) / PC(n,i)], le client pourra évaluer le débit moyen correspondant au flux RTP émis par la source SSRC(i) comme étant égal au nombre moyen de paquets émis par unité de temps par cette source multiplié par la taille moyenne de la charge utile augmentée de la taille HS de l'entête IPv4 (20 octets) ou IPv6 (40 octets) et de l'entête UDP (8 octets) du paquet IP la transportant.

On peut par exemple calculer le débit moyen selon la formule :

$$MPR \times MPS = \{[OC(n+j,i) - OC(n,i)] + HS \times [PC(n+j,i) - PC(n,i)]\} / [NTP(n+j) - NTP(n)]$$

Lors d'une étape E404, le client 201 décide ou non de s'abonner au flux à destination de l'adresse multicast aG émis par le client 202. Si le client 201 a connaissance d'une bande passante négociée avec le réseau, il peut décider de ne s'abonner que dans le cas où la bande passante descendante est suffisante pour le débit moyen calculé lors de l'étape E403.

Lors d'une étape E405, le client 201 s'abonne au flux à destination de l'adresse multicast aG émis par l'adresse IP2 du client 202, en émettant une requête IGMPv3 ou MLDv2 vers le réseau 301, précisant l'adresse aG comme adresse de groupe multicast et l'adresse IP2 comme adresse source. Le client 201 obtient l'adresse IP2 en recherchant, parmi les couples mémorisés lors de l'étape E603, l'adresse IP correspondant à l'identifiant SSRC2 du client 202.

Le client 201 peut alors commencer à recevoir le trafic RTP émis pour le groupe multicast par le client 202.

Si le client 201 n'a pas connaissance d'une bande passante négociée avec le réseau, il peut inclure dans la requête IGMPv3 ou MLDv2 le débit moyen calculé lors de l'étape E403, afin que le réseau puisse prendre la décision, en réalisant ce qui est appelé un contrôle d'admission.

Dans un mode de réalisation alternatif, le serveur émet des messages RTCP XR, à la place ou en plus des messages RTCP SR.

Dans ce mode, lors de l'étape E700 ci-dessus, alternativement ou de façon complémentaire, le serveur 101 émet un message RTCP XR comprenant des paramètres de qualité, différents de ceux compris dans un message de type RTCP SR, relatifs aux trafics RTP émis par les clients sélectionnés lors de l'étape E503, ces clients étant identifiés uniquement par leur SSRC dans le message.

Dans ce mode, lors de l'étape E701 ci-dessus, le client 201 reçoit le message RTCP XR comprenant des paramètres de qualité relatifs au flux RTP émis par le client 202. Le message RTCP XR indique l'identifiant SSRC2 mais pas l'adresse IP2. Le standard IETF RFC 3611 a défini les informations suivantes pour le message RTCP XR:

- l'identifiant SSRC (Synchronisation Source) de la source RTP ayant émis le flux RTP reçus auquel correspondent les informations suivantes:
- le taux de paquets perdus (loss rate) depuis le début de la réception d'un flux RTP en provenance de la source RTP,
- le taux de paquets d'un flux RTP en provenance de la source RTP non pris en compte (discard rate) du fait d'une arrivée tardive ou prématurée, induisant soit un assèchement, soit un débordement du tampon de suppression de gigue,

- le taux de paquets perdus ou non pris en compte durant une rafale (burst density) pour un flux RTP en provenance de la source RTP,
- le taux de paquets perdus ou non pris en compte entre deux rafales (gap density) pour un flux RTP en provenance de la source RTP,
- la durée moyenne de rafale (burst duration) pour un flux RTP en provenance de la source RTP,
- la durée moyenne entre deux rafales (gap duration) pour un flux RTP en provenance de la source RTP.

Toujours dans ce mode, lors de l'étape E403 ci-dessus, le client 201 calcule une valeur de taille de file d'attente nécessaire pour recevoir le flux émis par le client 202, à l'aide des informations comprises dans le message RTCP XR reçu lors de l'étape E701.

Les informations comprises dans le message RTCP XR permettent au client 201 de connaitre la durée moyenne des rafales, la durée moyenne entre deux rafales, ainsi que le taux de paquets perdus ou non pris en compte du fait d'un assèchement ou d'un débordement d'un tampon de suppression de gigue qui recevrait le flux RTP émis par une source RTP donnée. En supposant la taille du tampon de suppression de gigue connue, un client peut donc évaluer sa capacité à recevoir le flux RTP émis par une source RTP donnée.

Lorsque la taille du tampon de suppression de gigue est supérieure à la durée moyenne des rafales et la durée moyenne entre deux rafales, et que le taux de paquets perdus ou non pris en compte du fait d'un assèchement ou d'un débordement d'un tampon de suppression de gigue est faible, par exemple 1%, le client RTP peut par exemple décider de s'abonner au flux RTP émis par la source RTP en question.

On notera que l'IETF peut encore définir de nouveaux messages complémentaires aux messages RTCP SR ou XR et contenant d'autres informations qui pourraient être utiles aux clients pour décider de recevoir un flux émis par un autre client. Le présent mécanisme pourra alors s'appliquer de la même façon.

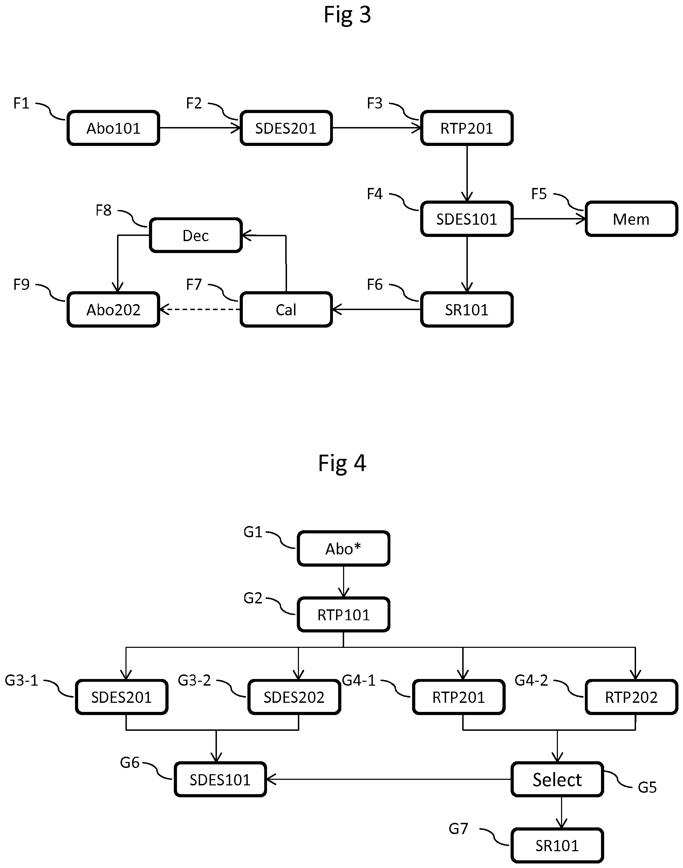

La **figure 3** présente un exemple de mise en oeuvre, par un client, des étapes du procédé de demande d'abonnement à un flux de données, selon un aspect de l'invention.

Lors d'une étape F1, le client 201 émet vers le réseau 301 une demande d'abonnement au groupe multicast d'adresse aG en précisant comme source l'adresse IP du serveur 101.

Lors d'une étape F2, le client 201 émet un message RTCP SDES comprenant sont adresse IP1 et l'identifiant SSRC1 qu'il s'est attribué.

Lors d'une étape F3, le client 201 émet vers l'adresse aG des données temps réel sous forme de paquets RTP.

Lors d'une étape F4, le client 201 reçoit un message RTCP SDES agrégé en provenance du serveur 101, comprenant des couples { adresse IP ; identifiant SSRC } correspondant aux différentes sources du groupe multicast d'adresse aG.

Lors d'une étape F5, le client 201 mémorise les couples reçus dans une table T.

Lors d'une étape F6, le client 201 reçoit un message RTCP SR (et/ou XR) en provenance du serveur 101, comprenant des paramètres de qualité relatifs aux trafics RTP des sources clients du groupe multicast d'adresse aG.

Lors d'une étape F7, le client 201 calcule une valeur de débit moyen et/ou de taille de file d'attente nécessaire pour recevoir le flux émis par le client 202.

Lors d'une étape F8, le client 201 décide ou non de s'abonner au flux du client 202, en fonction du débit disponible dans sa connexion avec le réseau, et/ou de la taille de sa file d'attente.

Lors d'une étape F9, en cas de décision positive suite à l'étape F8, le client 201 consulte sa table T afin d'obtenir l'adresse IP correspondant au client 202 dont il connait l'identifiant SSRC2, et émet une demande d'abonnement au groupe multicast d'adresse aG en précisant comme source l'adresse IP2 qui est celle du client 202.

Alternativement, l'étape de décision F8 peut être omise, et lors de l'étape F9, le client 201 peut inclure dans sa demande d'abonnement la ou les valeurs calculées lors de l'étape F7, et laisser une entité du réseau décider si la demande d'abonnement peut ou doit être satisfaite.

La **figure 4** présente un exemple de mise en oeuvre, par un serveur, des étapes du procédé de gestion de flux de données, selon un aspect de l'invention.

Lors d'une étape G1, le serveur 101 s'abonne au groupe multicast d'adresse aG en émettant vers le réseau 301 une demande d'abonnement précisant l'adresse aG du groupe multicast, sans exclure de source.

Lors d'une étape G2, le serveur 101 émet vers l'adresse aG des données temps réel sous forme de paquets RTP.

Lors d'étapes G3-1, G3-2, G3-x (non illustrée car similaire à G3-1 et G3-2), le serveur 101 reçoit en provenance respectivement des clients 201, 202, 20x un message RTCP SDES comprenant l'adresse IP du client émetteur et l'identifiant SSRC qu'il s'est attribué.

Lors d'étapes G4-1, G4-2, G4-x (non illustrée car similaire à G4-1 et G4-2), le serveur 101 reçoit en provenance respectivement des clients 201, 202, 20x un flux des données temps réel sous forme de paquets RTP.

Lors d'une étape G5, le serveur 101 sélectionne parmi les clients 201, 202 et 20x ceux pour lesquels des paramètres relatifs à la qualité des flux RTP reçus lors des étapes G4-1, G4-2, G4-x, présentent des valeurs satisfaisantes, comme un nombre nul de paquets perdus et/ou une gigue inter-arrivée inférieure à un certain seuil.

Lors d'une étape G6, le serveur 101 génère et émet un message RTCP SDES agrégé comprenant des couples {addresse IP ; identifiant SSRC} relatifs aux clients sélectionnés lors de l'étape G5.

Lors d'une étape G7, le serveur 101 émet un message RTCP SR (et/ou XR) comprenant des paramètres de qualité relatifs aux trafics RTP des sources clients sélectionnés lors de l'étape G5, ces clients étant identifiés uniquement par leur SSRC dans le message.

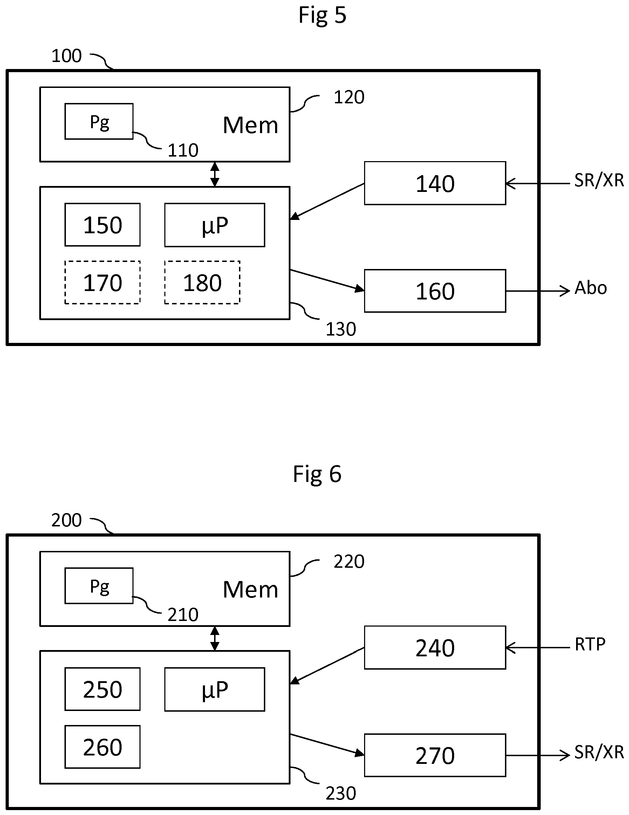

En relation avec la **figure 5,** on présente maintenant un exemple de structure d'un dispositif de demande d'abonnement à un flux de données, selon un aspect de l'invention.

Le dispositif 100 de demande d'abonnement à un flux de données met en oeuvre le procédé de demande d'abonnement à un flux de données, dont différents modes de réalisation viennent d'être décrits.

Un tel dispositif 100 peut être mis en oeuvre dans un terminal d'utilisateur, tel qu'un téléphone intelligent (smartphone), une tablette numérique, un ordinateur ou un capteur.

Par exemple, le dispositif 100 comprend une unité de traitement 130, équipée par exemple d'un microprocesseur $\mu$P, et pilotée par un programme d'ordinateur 110, stocké dans une mémoire 120 et mettant en oeuvre le procédé de demande d'abonnement à un flux de données selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :

- un module de réception 140, apte à recevoir en provenance d'un serveur d'un groupe multicast au moins un message de gestion comprenant au moins un paramètre de qualité relatif à un flux émis à destination de l'adresse du groupe multicast par un terminal client du groupe multicast,
- un module de décision 150, apte à décider un abonnement au flux du terminal client, en fonction d'un critère dépendant de l'au moins un paramètre de qualité reçu,
- un module d'émission 160, apte à émettre un message de demande d'abonnement au flux du terminal client en cas de décision positive.

Avantageusement, l'unité de traitement 130 peut comprendre:

- un module de calcul 170, apte à calculer la valeur d'un débit moyen nécessaire pour recevoir le flux émis à destination de l'adresse du groupe multicast par le terminal client, à partir de l'au moins un paramètre de qualité,
- un module de calcul 180, apte à calculer la valeur d'une taille de file d'attente nécessaire pour recevoir le flux émis à destination de l'adresse du groupe multicast par le terminal client, à partir de l'au moins un paramètre de qualité.

En relation avec la **figure 6,** on présente maintenant un exemple de structure d'un dispositif de gestion de flux de données, selon un aspect de l'invention.

Le dispositif 200 de gestion de flux de données met en oeuvre le procédé de gestion de flux de données, dont différents modes de réalisation viennent d'être décrits.

Un tel dispositif 200 peut être mis en oeuvre dans un serveur multicast, tel qu'un serveur de TV, un serveur de jeux, de visioconférence ou bien encore un serveur de réseau de capteurs.

Par exemple, le dispositif 200 comprend une unité de traitement 230, équipée par exemple d'un microprocesseur $\mu$P, et pilotée par un programme d'ordinateur 210, stocké dans une mémoire 220 et mettant en oeuvre le procédé de gestion de flux de données selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 200 comprend :

- un module de réception 240, apte à recevoir au moins un flux émis par au moins un terminal client à destination de l'adresse du groupe multicast,
- un module d'extraction 250, apte à en extraire au moins un paramètre relatif à la qualité desdit flux,
- un module de sélection 260, apte à sélectionner au moins un desdits terminaux clients parmi, en fonction de l'au moins un paramètre extrait,
- un module d'émission 270, apte à émettre à destination de l'adresse du groupe multicast au moins un message de gestion comprenant l'au moins un paramètre extrait correspondant à l'au moins un client sélectionné.

Les modules décrits en relation avec les figures 5 et 6 peuvent être des modules matériels ou logiciels.

Les exemples de réalisation de l'invention qui viennent d'être présentés ne sont que quelques uns des modes de réalisation envisageables. Ils montrent que l'invention permet à un client d'un groupe de diffusion multicast de s'abonner au flux d'un autre client, uniquement s'il est assuré d'avoir assez de débit dans le sens descendant pour le recevoir, et ce même si aucun serveur centralisé n'a connaissance des débits montants et descendants garantis et autorisés par le réseau de transport.

**Revendications**

1. **Procédé** de demande d'abonnement à un flux de données diffusé dans un groupe de diffusion multicast (G), ledit groupe comprenant des sources dont un serveur (101), un premier client (201) et un second client (202), lesdites sources étant connectées entre elles au travers d'un réseau de communications électroniques (301),
le groupe de diffusion multicast étant identifié par une adresse,
un flux émis à destination de l'adresse du groupe multicast par une première source étant reçu par une seconde source si la seconde source est préalablement abonnée à la première source,
le premier client étant abonné au serveur,
le procédé comprenant les étapes suivantes mises en oeuvre par le premier client:

   • réception (E701, F6), en provenance du serveur, d'au moins un message de gestion comprenant au moins un paramètre de qualité relatif au flux émis à destination de l'adresse du groupe multicast par le second client,
   • décision (E404, F8) d'abonnement au second client, en fonction d'un critère dépendant de l'au moins un paramètre de qualité reçu,
   • en cas de décision positive, émission (E405, F9) d'un message de demande d'abonnement au flux émis par le second client.

2. **Procédé** de demande d'abonnement selon la revendication 1, selon lequel l'étape de décision prend en compte un critère comprenant la valeur d'un débit moyen nécessaire pour recevoir le flux émis à destination de l'adresse du groupe multicast par le second client, et est précédée d'une étape de calcul (E403, F7) de cette valeur, à partir de l'au moins un paramètre de qualité.

3. **Procédé** de demande d'abonnement selon la revendication 1, selon lequel l'étape de décision prend en compte un critère comprenant la valeur d'une taille de file d'attente nécessaire pour recevoir le flux émis à destination de l'adresse du groupe multicast par le second client, et est précédée d'une étape de calcul de cette valeur, à partir de l'au moins un paramètre de qualité.

4. **Procédé** de demande d'abonnement selon l'une des revendications précédentes, où le message de demande d'abonnement comprend la valeur calculée.

5. **Procédé** de gestion de flux de données diffusés dans un groupe de diffusion multicast (G), ledit groupe comprenant des sources dont un serveur (101), un premier client (201) et au moins un second client (202, 20x), lesdites sources étant connectées entre elles au travers d'un réseau de communications électroniques (301),
le groupe de diffusion multicast étant identifié par une adresse,
un flux émis à destination de l'adresse du groupe multicast par une première source étant reçu par une seconde source si la seconde source est préalablement abonnée à la première source,
le premier client étant abonné au serveur,
le serveur étant abonné audit au moins un second client et étant apte à recevoir un flux émis par le second client à destination de l'adresse du groupe multicast, et à en extraire au moins un paramètre relatif à la qualité dudit flux,
le procédé comprenant les étapes suivantes mises en oeuvre par le serveur:

   • sélection (E503, G5) d'au moins un client parmi l'au moins un second client, en fonction de l'au moins un paramètre extrait,
   • émission (E700, G7) à destination de l'adresse du groupe multicast d'au moins un message de gestion comprenant l'au moins un paramètre extrait correspondant à l'au moins un client sélectionné.

6. **Dispositif** de demande d'abonnement à un flux de données diffusé dans un groupe de diffusion multicast (G), ledit groupe comprenant des sources dont un serveur (101), un premier client (201) et un second client (202), lesdites sources étant connectées entre elles au travers d'un réseau de communications électroniques (301),
le groupe de diffusion multicast étant identifié par une adresse,
un flux émis à destination de l'adresse du groupe multicast par une première source étant reçu par une seconde source si la seconde source est préalablement abonnée à la première source,
le premier client étant abonné au serveur,
le dispositif (100) étant mis en oeuvre dans le premier client et comprenant les modules suivants:

• réception (140), en provenance du serveur, d'au moins un message de gestion comprenant au moins un paramètre de qualité relatif au flux émis à destination de l'adresse du groupe multicast par le second client,
• décision (150) d'abonnement au second client, en fonction d'un critère dépendant de l'au moins un paramètre de qualité reçu,
• en cas de décision positive, émission (160) d'un message de demande d'abonnement au flux émis par le second client.

7. **Dispositif** de gestion de flux de données diffusés dans un groupe de diffusion multicast (G), ledit groupe comprenant des sources dont un serveur (101), un premier client (201) et au moins un second client (202, 20x), lesdites sources étant connectées entre elles au travers d'un réseau de communications électroniques (301),
le groupe de diffusion multicast étant identifié par une adresse,
un flux émis à destination de l'adresse du groupe multicast par une première source étant reçu par une seconde source si la seconde source est préalablement abonnée à la première source,
le premier client étant abonné au serveur,
le serveur étant abonné audit au moins un second client et étant apte à recevoir un flux émis par le second client à destination de l'adresse du groupe multicast, et à en extraire au moins un paramètre relatif à la qualité dudit flux,
le dispositif (200) étant mis en oeuvre dans le serveur et comprenant les modules suivants:

• sélection (260) d'au moins un client parmi l'au moins un second client, en fonction de l'au moins un paramètre extrait,
• émission (270) à destination de l'adresse du groupe multicast d'au moins un message de gestion comprenant l'au moins un paramètre extrait correspondant à l'au moins un client sélectionné.

8. **Equipement client** d'un groupe de diffusion multicast, l'équipement client étant connecté à un réseau de communications électroniques et comprenant un dispositif de demande d'abonnement à un flux de données selon la revendication 6.

9. **Equipement serveur** d'un groupe de diffusion multicast, l'équipement serveur étant connecté à un réseau de communications électroniques et comprenant un dispositif de gestion de flux de données selon la revendication 7.

10. **Groupe de diffusion multicast** comprenant un équipement serveur selon la revendication 9 et au moins deux équipements clients selon la revendication 8, lesdits équipements serveur et clients étant connectés entre eux au travers d'un réseau de communications électroniques.

11. **Programme d'ordinateur, caractérisé en ce qu'**il comprend des instructions pour la mise en oeuvre des étapes du procédé de demande d'abonnement à un flux de données selon la revendication 1, lorsque ce procédé est exécuté par un processeur.

12. **Support d'enregistrement,** lisible par un équipement client, sur lequel est enregistré le programme selon la revendication 11.

13. **Programme d'ordinateur, caractérisé en ce qu'**il comprend des instructions pour la mise en oeuvre des étapes du procédé de gestion de flux de données selon la revendication 5, lorsque ce procédé est exécuté par un processeur.

14. **Support d'enregistrement,** lisible par un équipement serveur, sur lequel est enregistré le programme selon la revendication 13.

**Patentansprüche**

1. Verfahren zum Abonnieren eines Datenstroms, der in einer Multicast-Verbreitungsgruppe (G) verbreitet wird, wobei die Gruppe Quellen umfasst, darunter einen Server (101), einen ersten Klienten (201) und einen zweiten Klienten (202), wobei die Quellen miteinander über ein elektronisches Kommunikationsnetz (301) verbunden sind,
wobei die Multicast-Verbreitungsgruppe durch eine Adresse identifiziert ist,
wobei ein Strom, der in Richtung der Adresse der Multicast-Gruppe von einer ersten Quelle gesandt wird, von einer zweiten Quelle empfangen wird, wenn die zweite Quelle vorher bei der ersten Quelle abonniert ist,
wobei der erste Klient beim Server abonniert ist,
wobei das Verfahren die folgenden Schritte umfasst, die vom ersten Klienten eingesetzt werden:

• Empfang (E701, F6) vom Server mindestens einer Steuerungsnachricht, umfassend mindestens einen Qualitätsparameter in Zusammenhang mit dem in Richtung der Adresse der Multicast-Gruppe des zweiten Klienten gesandten Strom,
• Entscheidung (E404, F8) eines Abonnierens beim zweiten Klienten in Abhängigkeit von einem Kriterium, das von dem mindestens einen empfangenen Qualitätsparameter abhängt,
• im Falle einer positiven Entscheidung Senden (E405, F9) einer Nachricht zur Beantragung eines Abonnements bei dem vom zweiten Klienten gesandten Strom.

2. Verfahren zur Beantragung eines Abonnements nach Anspruch 1, bei dem der Entscheidungsschritt ein Kriterium berücksichtigt, umfassend den Wert eines durchschnittlichen Durchsatzes, der notwendig ist, um den in Richtung der Adresse der Multicast-Gruppe vom zweiten Klienten gesandten Strom zu empfangen, wobei ihm ein Schritt der Berechnung (E403, F7) dieses Werts aus dem mindestens einen Qualitätsparameter vorausgeht.

3. Verfahren zur Beantragung eines Abonnements nach Anspruch 1, bei dem der Entscheidungsschritt ein Kriterium berücksichtigt, umfassend den Wert einer Größe einer Warteschlange, der notwendig ist, um den in Richtung der Adresse der Multicast-Gruppe durch den zweiten Klienten gesandten Strom zu empfangen, wobei ihm ein Schritt der Berechnung dieses Werts aus dem mindestens einen Qualitätsparameter vorausgeht.

4. Verfahren zur Beantragung eines Abonnements nach einem der vorhergehenden Ansprüche, bei dem die Nachricht der Beantragung eines Abonnements den berechneten Wert umfasst.

5. Verfahren zur Steuerung eines Datenstroms, der in einer Multicast-Verbreitungsgruppe (G) verbreitet wird, wobei die Gruppe Quellen umfasst, darunter einen Server (101), einen ersten Klienten (201) und mindestens einen zweiten Klienten (202, 20x), wobei die Quellen miteinander über ein elektronisches Kommunikationsnetz (301) verbunden sind,
wobei die Multicast-Verbreitungsgruppe durch eine Adresse identifiziert ist,
wobei ein Strom, der in Richtung der Adresse der Multicast-Gruppe von einer ersten Quelle gesandt wird, von einer zweiten Quelle empfangen wird, wenn die zweite Quelle vorher bei der ersten Quelle abonniert ist,
wobei der erste Klient beim Server abonniert ist,
wobei der Server an dem mindestens einen zweiten Klienten abonniert und geeignet ist, einen von dem zweiten Klienten in Richtung der Adresse der Multicast-Gruppe gesandten Strom zu empfangen und daraus mindestens einen Parameter in Zusammenhang mit der Qualität des Stroms zu extrahieren,
wobei das Verfahren die folgenden, vom Server eingesetzten Schritte umfasst:

• Auswahl (E503, G5) mindestens eines Klienten unter dem mindestens einen zweiten Klienten in Abhängigkeit von dem mindestens einen extrahierten Parameter,
• Senden (E700, G7) in Richtung der Adresse der Multicast-Gruppe mindestens einer Steuerungsnachricht, umfassend den mindestens einen extrahierten Parameter entsprechend dem mindestens einen ausgewählten Klienten.

6. Vorrichtung zum Abonnieren eines Datenstroms, der in einer Multicast-Verbreitungsgruppe (G) verbreitet wird, wobei die Gruppe Quellen umfasst, darunter einen Server (101), einen ersten Klienten (201) und einen zweiten Klienten (202), wobei die Quellen miteinander über ein elektronisches Kommunikationsnetz (301) verbunden sind, wobei die Multicast-Verbreitungsgruppe durch eine Adresse identifiziert ist,
wobei ein Strom, der in Richtung der Adresse der Multicast-Gruppe von einer ersten Quelle gesandt wird, von einer zweiten Quelle empfangen wird, wenn die zweite Quelle vorher bei der ersten Quelle abonniert ist,
wobei der erste Klient beim Server abonniert ist,
wobei die Vorrichtung (100) in dem ersten Klienten eingesetzt wird und die folgenden Module umfasst:

• Empfang (140) vom Server mindestens einer Steuerungsnachricht, umfassend mindestens einen Qualitätsparameter in Zusammenhang mit dem in Richtung der Adresse der Multicast-Gruppe des zweiten Klienten gesandten Strom,
• Entscheidung (150) eines Abonnierens beim zweiten Klienten in Abhängigkeit von einem Kriterium, das von dem mindestens einen empfangenen Qualitätsparameter abhängt,
• im Falle einer positiven Entscheidung Senden (160) einer Nachricht zur Beantragung eines Abonnements bei dem vom zweiten Klienten gesandten Strom.

7. Vorrichtung zur Steuerung eines Datenstroms, der in einer Multicast-Verbreitungsgruppe (G) verbreitet wird, wobei die Gruppe Quellen umfasst, darunter einen Server (101), einen ersten Klienten (201) und mindestens einen zweiten Klienten (202, 20x), wobei die Quellen miteinander über ein elektronisches Kommunikationsnetz (301) verbunden sind,

wobei die Multicast-Verbreitungsgruppe durch eine Adresse identifiziert ist,

wobei ein Strom, der in Richtung der Adresse der Multicast-Gruppe von einer ersten Quelle gesandt wird, von einer zweiten Quelle empfangen wird, wenn die zweite Quelle vorher bei der ersten Quelle abonniert ist,

wobei der erste Klient beim Server abonniert ist,

wobei der Server an dem mindestens einen zweiten Klienten abonniert und geeignet ist, einen von dem zweiten Klienten in Richtung der Adresse der Multicast-Gruppe gesandten Strom zu empfangen und daraus mindestens einen Parameter in Zusammenhang mit der Qualität des Stroms zu extrahieren,

wobei die Vorrichtung (200) in dem Server eingesetzt wird und die folgenden Module umfasst:

• Auswahl (260) mindestens eines Klienten unter dem mindestens einen zweiten Klienten in Abhängigkeit von dem mindestens einen extrahierten Parameter,

• Senden (270) in Richtung der Adresse der Multicast-Gruppe mindestens einer Steuerungsnachricht, umfassend den mindestens einen extrahierten Parameter entsprechend dem mindestens einen ausgewählten Klienten.

8. Klientenausrüstung einer Multicast-Verbreitungsgruppe, wobei die Klientenausrüstung an ein elektronisches Kommunikationsnetz angeschlossen ist und eine Vorrichtung zur Beantragung eines Abonnierens eines Datenstroms nach Anspruch 6 umfasst.

9. Serverausrüstung einer Multicast-Verbreitungsgruppe, wobei die Serverausrüstung an ein elektronisches Kommunikationsnetz angeschlossen ist und eine Vorrichtung zur Steuerung eines Datenstroms nach Anspruch 7 umfasst.

10. Multicast-Verbreitungsgruppe, umfassend eine Serverausrüstung nach Anspruch 9 und mindestens zwei Klientenausrüstungen nach Anspruch 8, wobei die Server- und Klientenausrüstungen miteinander über ein elektronisches Kommunikationsnetz verbunden sind.

11. Computerprogramm, **dadurch gekennzeichnet, dass** es Anweisungen für den Einsatz der Schritte des Verfahrens zur Beantragung des Abonnierens eines Datenstroms nach Anspruch 1 umfasst, wenn dieses Verfahren von einem Prozessor ausgeführt wird.

12. Aufzeichnungsträger, der von einer Klientenausrüstung lesbar ist, auf dem das Programm nach Anspruch 11 aufgezeichnet ist.

13. Computerprogramm, **dadurch gekennzeichnet, dass** es Anweisungen für den Einsatz der Schritte des Verfahrens zur Steuerung eines Datenstroms nach Anspruch 5 umfasst, wenn dieses Verfahren von einem Prozessor ausgeführt wird.

14. Aufzeichnungsträger, der von einer Serverausrüstung lesbar ist, auf dem das Programm nach Anspruch 13 aufgezeichnet ist.

**Claims**

1. Method for requesting subscription to a data stream distributed in a multicast distribution group (G), said group comprising sources, including a server (101), a first client (201) and a second client (202), said sources being connected together through an electronic communications network (301),

the multicast distribution group being identified by an address,

a stream sent to the address of the multicast group by a first source being received by a second source if the second source is previously a subscriber to the first source,

the first client being a subscriber to the server,

the method comprising the following steps implemented by the first client:

• reception (E701, F6), originating from the server, of at least one management message comprising at least one quality parameter relating to the stream sent to the address of the multicast group by the second client,

• decision (E404, F8) of subscription to the second client, as a function of a criterion depending on the at least one quality parameter received,

• in case of positive decision, sending (E405, F9) of a message requesting subscription to the stream sent by the second client.

2. Method for requesting subscription according to Claim 1, according to which the decision step takes into account a criterion comprising the value of a mean bitrate necessary in order to receive the stream sent to the address of the multicast group by the second client, and is preceded by a step of calculation (E403, F7) of this value, on the basis of the at least one quality parameter.

3. Method for requesting subscription according to Claim 1, according to which the decision step takes into account a criterion comprising the value of a queue size necessary in order to receive the stream sent to the address of the multicast group by the second client, and is preceded by a step of calculating this value, on the basis of the at least one quality parameter.

4. Method for requesting subscription according to one of the preceding claims, where the subscription request message comprises the calculated value.

5. Method for managing data streams distributed in a multicast distribution group (G), said group comprising sources, including a server (101), a first client (201) and at least one second client (202, 20x), said sources being connected together through an electronic communications network (301), the multicast distribution group being identified by an address, a stream sent to the address of the multicast group by a first source being received by a second source if the second source is previously a subscriber to the first source, the first client being a subscriber to the server, the server being a subscriber to said at least one second client and being able to receive a stream sent by the second client to the address of the multicast group, and to extract therefrom at least one parameter relating to the quality of said stream, the method comprising the following steps implemented by the server:

• selection (E503, G5) of at least one client from among the at least one second client, as a function of the at least one parameter extracted,

• sending (E700, G7) to the address of the multicast group of at least one management message comprising the at least one extracted parameter corresponding to the at least one selected client.

6. Device for requesting subscription to a data stream distributed in a multicast distribution group (G), said group comprising sources, including a server (101), a first client (201) and a second client (202), said sources being connected together through an electronic communications network (301), the multicast distribution group being identified by an address, a stream sent to the address of the multicast group by a first source being received by a second source if the second source is previously a subscriber to the first source, the first client being a subscriber to the server, the device (100) being implemented in the first client and comprising the following modules:

• reception (140), originating from the server, of at least one management message comprising at least one quality parameter relating to the stream sent to the address of the multicast group by the second client,

• decision (150) of subscription to the second client, as a function of a criterion depending on the at least one quality parameter received,

• in case of positive decision, sending (160) of a message requesting subscription to the stream sent by the second client.

7. Device for managing data streams distributed in a multicast distribution group (G), said group comprising sources, including a server (101), a first client (201) and at least one second client (202, 20x), said sources being connected together through an electronic communications network (301), the multicast distribution group being identified by an address, a stream sent to the address of the multicast group by a first source being received by a second source if the second source is previously a subscriber to the first source, the first client being a subscriber to the server, the server being a subscriber to said at least one second client and being able to receive a stream sent by the second client to the address of the multicast group, and to extract therefrom at least one parameter relating to the quality of said stream,
the device (200) being implemented in the server and comprising the following modules:

• selection (260) of at least one client from among the at least one second client, as a function of the at least one parameter extracted,
• sending (270) to the address of the multicast group of at least one management message comprising the at least one extracted parameter corresponding to the at least one selected client.

8. Client item of equipment of a multicast distribution group, the client item of equipment being connected to an electronic communications network and comprising a device for requesting subscription to a data stream according to Claim 6.

9. Server item of equipment of a multicast distribution group, the server item of equipment being connected to an electronic communications network and comprising a device for managing data streams according to Claim 7.

10. Multicast distribution group comprising a server item of equipment according to Claim 9 and at least two client items of equipment according to Claim 8, said server item of equipment and client items of equipment being connected together through an electronic communications network.

11. Computer program, **characterized in that** it comprises instructions for the implementation of the steps of the method for requesting subscription to a data stream according to Claim 1, when this method is executed by a processor.

12. Recording medium, readable by a client item of equipment, on which the program according to Claim 11 is recorded.

13. Computer program, **characterized in that** it comprises instructions for the implementation of the steps of the method for managing data streams according to Claim 5, when this method is executed by a processor.

14. Recording medium, readable by a server item of equipment, on which the program according to Claim 13 is recorded.

# Fig 1

# Fig 2

## Fig 3

## Fig 4

## Fig 5

## Fig 6

**EP 3 053 303 B1**

## RÉFÉRENCES CITÉES DANS LA DESCRIPTION

**Documents brevets cités dans la description**

- WO 2011067495 A